# EUROPEAN PATENT SPECIFICATION

(11) **EP 3 559 439 B1**
(45) Date of publication and mention of the grant of the patent: **15.02.2023**
(21) Application number: 16836124.4
(22) Date of filing: 30.12.2016
(51) Int. Cl.: F03B 13/18

(54) **BUOY-SURFACE SYSTEM ENABLING THE GENERATION OF ENERGY FROM THE WAVE MOTIONS**
AUFTRIEBSOBERFLÄCHENSYSTEM ZUR ERZEUGUNG VON ENERGIE AUS DEN WELLENBEWEGUNGEN
SYSTÈME DE SURFACE DE BOUÉE PERMETTANT LA PRODUCTION D'ÉNERGIE À PARTIR DES MOUVEMENTS ONDULATOIRES

(30) Priority: 23.12.2016 TR 201619405
(43) Date of publication of application: 30.10.2019
(73) Proprietor: Cakir, Ayla, 34843 Istanbul (TR)
(72) Inventor: Cakir, Ayla, 34843 Istanbul (TR)
(86) International application number: PCT/TR2016/000218
(87) International publication number: WO 2018/117987

(56) References cited:
- EP-A1- 2 369 170
- CN-U- 202 756 167
- GB-A- 2 242 939
- US-A- 3 335 667
- US-A1- 2013 255 247

## Description

### Technical Field

The system concerns a wave generator wherein a buoy group consisting of at least one buoy is floated on the wave and the motion energy generated by the wave is absorbed and converted into usable forms of energy.

### State of the Art

The waves comprise a powerful and unlimited source of renewable energy. This energy is obtained from the surface of the waves or from the pressure of the subsurface waves. As is known, the waving is the oscillating motion caused by the wind on the surface of the water. The wave energy machines generate the energy using this motion and the pressure resulting from this motion.

The energy conversion mechanisms known as wave energy machines or wave generators are the mechanisms that comprise the parts capable of moving by the motions of a fluid.

The moving mechanism positioned within the structure is able to obtain the motion as a result of the motion of the fluid, which motion may in turn be converted into different energy forms for utilization.

In the water bodies such as the seas and the oceans, the fluid may move parallel to the floor of the water body as well as vertically, under the influence of the wind and different variables. This may allow the wave generators to perform the conversion of energy by the use of the units sensitive to both vertical motion and horizontal motion.

For example, the Pelamis type wave generators may operate in a manner sensitive to the fluid motion vertical to the fluid bed, whereas the Oyster type wave generators may enable the conversion of energy by utilizing the forces acting parallel to the floor of the water body.

Although they are manufactured in different forms and in a state sensitive to different forces, there are many common properties expected from the wave generators.

Since the wave generators do not have very high amounts of energy generation, they are desired to feature low production and maintenance costs. Many wave generators are able to operate on the basis of the motion energy generated by the waves, without any external input of energy. Such wave generators may generally be positioned in the respective deployment sites and may be operated for long durations without the need for maintenance. To that end, it is desirable for the wave generators to be of a form that is durable and that is less prone to the occurrence of failures. The easiest choice in order to reduce the possibility of failures is the simplification of the structure.

Another feature expected from the wave generators is a high efficiency for the energy conversion even when the wave intensity is low. While the wave intensity is high in the oceans and massive water bodies or the oceans that are connected to these, the wave intensity is limited in the marine systems that are far from such bodies or that are comprised by the closed systems. In the water bodies with limited wave intensity, the systems that are smaller and that are sensitive to motion may be used in order to obtain the energy from the limited water motions. For instance, the Oyster type wave generators are not suitable for use in the fluid beds with such limited wave motions.

The systems enabling the conversion of energy as a result of the motion of the buoys and similar floating components under the influence of the waves may be mentioned as the example of the wave generators that are suitable for operation with limited wave intensity.

The patent application no. US5359229 discloses an apparatus utilizing the wave motions wherein said apparatus may rise and fall on a water body and may in this way generate the electrical energy.

Said apparatus is comprised by a column fixed to the bottom of the water body, the telescopic carrier arms fixed to the column and the energy conversion mechanisms positioned on the carrier arms.

The energy conversion mechanisms comprise the independent buoys capable of floating on the water body and the components for transmitting the motion formed as a result of the motions of said buoys in vertical direction with respect to the bottom of the water body under the influence of the motion of the waves.

The patent application no. GB2440154 discloses a wave generator capable of converting the wave motion into the multi-directional motion, said wave generator comprising a floating body with structure suitable for floating on the water. The floating body has a certain weight and is in a state of balance connected to a drum via the balancing weights so that it may float with its weight on the water without sinking.

The floating body moves upon the motion of the waves and is able to rotate, via this motion, the drum to which it is connected. The motion formed on the drum may be converted into different forms of energy.

The floating body according to the patent no. GB2440154 comprises only one floating mass consisting of a single piece.

Patent application no. US2006028025 discloses a wave-energy generation system comprising a fixed frame, a floating structure mounted to the fixed frame, a rotating shaft rotatably mounted to the fixed frame via connection with a generator and a rotating disk connected to the rotating shaft of the generator via a unidirectional coupling.

Each of the floating bodies connected to the system begins to move upon the motion of the wave, thereby being able to assist in the rotation of the connected rotating disk.

According to the patent application no. US2010270797, a buoy suspended within a water body is moved vertically by the use of the wave energy and an electricity generator is driven.

A balancing weight is used in order to enable the buoy to remain in suspended state within the water body.

The buoy according to said application is in the form of a solid cylinder with axial length greater than the diameter. Since the aim here is to maintain the buoy in a suspended state within the water rather than floating the same, a suspension mechanism uses the top surface of the buoy as the active component.

The patent application no. WO9630646 describes a double-acting fixed speed wave generator comprising a shaft that may be moved by a pair of floating bodies capable of moving in a direction of vertical wave motion that is almost continuous.

One of the floating body components moves in the upward direction from the bottom by the motion of the wave, while the other one is capable of moving in the opposite direction in order to create a balancing feature.

The floating bodies according to the application no. WO9630646 are the opposing surfaces each comprised by a single piece.

The wave generators described above, which are based on the motion of a floating body within or on the surface of a water body, comprise the energy conversion mechanisms operating under the action of the single-piece floating bodies that do not operate in a manner associated with one another. In this case, each floating body may separately act to assist in the rotation of the shaft of the drum to which it is connected.

The systems comprising only one floating body make use of the wave motion of a single floating body. This may cause the amount of energy absorbed from the wave to remain limited.

In the systems comprising more than one independent floating body, the amount of absorbed energy increases when the number of floating bodies is increased. However, because of the nature of the wave, the vector forces acting upon a floating body may be reduced by the forces acting upon another floating body.

Another technical difficulty encountered in the floating bodies operated independently of one another involves the great forces that the wave may apply on each floating body that is trying to resist the wave force on its own. Each floating body that is operated on its own may suffer damage due to the wave forces it experiences or may cause damage to the other components of the system as a result of the stress developed on such components.

In the document US2013255247, a wave based energy generation mechanism with a flexible surface is shown.

### The Problems Aimed to be Solved by the Invention

The object of the present invention is to form a wave generator structure, which is capable of increasing the amount of energy absorbed from the waves by way of formation of a floating body that is comprised by more than one floating body operating in association.

The object of the present invention is to increase the energy conversion efficiency by way of formation of a floating body that is able to perform the oscillation in harmony with the wave motion, said floating body being comprised by more than one floating body operating in association.

The object of the present invention is to increase the resistance by way of formation of a floating body that is able to perform the oscillation in harmony with the wave motion, said floating body being comprised by more than one floating body operating in association.

The object of the present invention is to increase the energy conversion efficiency by way of formation of a floating body that is able to perform the oscillation in harmony with the wave motion wherein more than one floating body is connected with a flexible surface.

Another object of the present invention is to form a wave generator suitable for the conversion of energy in the water bodies with low wave intensity.

Another object of the present invention is to form a wave generator, which has a simple structure and thus involves low maintenance and installation costs.

### Description of the Figures

Figure 1. A side view of the wave generator
Figure 2. A perspective view of the wave generator
Figure 3. A sectional view of the buoy system connection
Figure 4. A side view of the buoy system
Figure 5. A top view of the buoy system
Figure 6. A side view of the buoy system
Figure 7. A side view of the floating portion consisting of only the surface

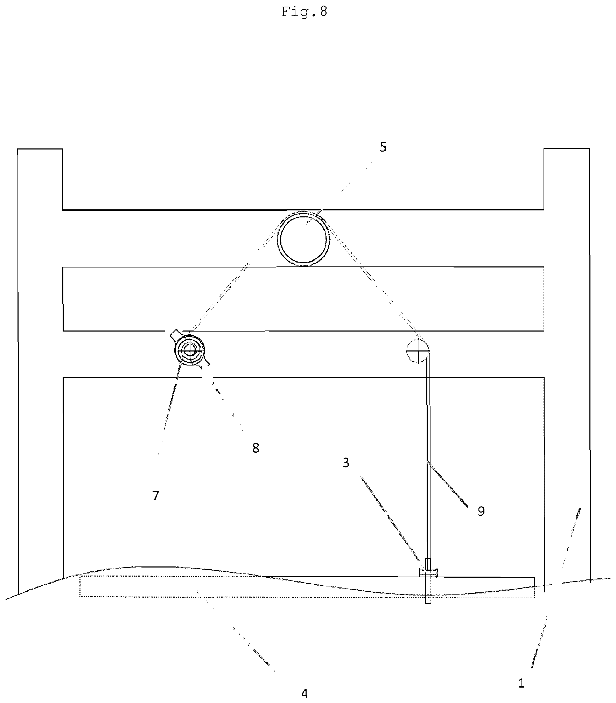

Figure 8. A schematic side view of the wave generator

### Description of the Reference Numerals in the Figures

1. Mounting body
2. Buoy unit
3. Connection member
4. Surface
5. Power generating shaft
6. Rotary coupling
7. Connection member guide shaft
8. Tension member
9. Connection member
10. Buoy-surface connection
11. Floating portion

### Description of the System

The invention relates to a wave-based energy generation mechanism consisting of a floating portion (11) with a surface with flexible structure (4) as defined by claim

In order to attach the connection members (9) to said floating portion (11), at least two connection members (3) are formed on the floating portion (11), preferably on the surface (4). In order to enable the motion generated by the wave to be absorbed to a maximum extent by the surface with flexible structure and to be transferred to the power generating shaft (5), a plurality of connection members (3) are formed on the surface (4) and are associated with the power generating shaft (5) through the connection members (9).

According to another embodiment of the invention, it is possible to make the floating body (11) only from the surface (4). In this case, the energy generation mechanism comprises a floating portion (11) with a surface (4), which is capable of floating on the water without the presence of buoys (2) and of any part that would assist in the floating, has certain weight and occupies certain area and has the capability of moving along the x, y, z axes in harmony with the wave motions.

Said surface (4) is connected by at least two points to the power generating shaft (5) by means of the connection member (9). According to a preferred embodiment of the invention, the surface (4) is connected via multiple points to the power generating shaft (5) by means of the connection member (9). The connection members (9) are connected to the surface (4) by means of the connection member/s (3). The connection of the surface (4) by as many points as possible to the power generating shaft (5) by means of the connection member (9) in order to enable the wave motion to be absorbed with maximum efficiency by the floating portion (11) will also improve the energy conversion efficiency of the system.

In order to operate the energy conversion system collectively, all the functional units explained above are positioned into a mounting body (1).

The surface (4) formed to that end designates a flexible structure where the specific gravity may be varied, said structure being partially full and partially empty, having various geometric forms and having the capability of floating.

According to an embodiment of the invention, the surface may also be formed from a combination of different surface (4) sub-unit components. Similarly, the surface (4) may also be formed by joining the buoy units (2). In this case, the surface (4) may also be formed by way of association of at least two and more buoy units (2) with a structure capable of forming a flexible surface (4) and of entering into a resonance in harmony with the sea waves based on their connection with one another. By joining the buoy units (2) to enable the same to form a surface (4), it will be possible to form a floating portion (11), which may float by the buoyancy of water and which may enter into the resonance with the wave motion owing to its flexibility. In this case, there will be no need left to use a separate mass of buoy unit (2) in order to enable the surface (4) to remain afloat.

It will be possible to similarly couple the surface (4), formed by way of joining the buoy units (2), to the power generating shaft (5) via at least two (or as many as possible according to the preferred embodiment of the invention) connection members (9).

As described above, the wave-based energy generation mechanism according to the invention may be operated with a floating portion (11) comprised by only a surface (4) as well as with a floating portion (11) comprised by a surface (4) associated with the mass of a buoy unit (2).

In this sense, the floating portion (11) described within the scope of the invention designates a surface (4) with the above-mentioned structural forms, which would be able to perform oscillation in harmony with the wave motions.

The dynamic forces contained within the wave motion and the static forces generated by the wave height, irrespective of the direction in which they are acting, interact with the flexible surface (4) with the capability of exhibiting oscillation in harmony with the wave. The floating portion (11) formed by the structural forms of the flexible surface (4) gains mobility along the x, y, z axes under the effect of the wave. These motions on the floating body (11) are defined herein as the force impacts along the x, y, z axes.

The floating portion (11) formed by the flexible surface (4) forms according to the following phrases is arranged such that the floating portion (11) motions along the x, y, z axes formed thereon under the effect of the wave are transferred via the connection members (9), which are connected by as many points as possible, to the power generating shaft (5) to drive said power generating shaft (5) .

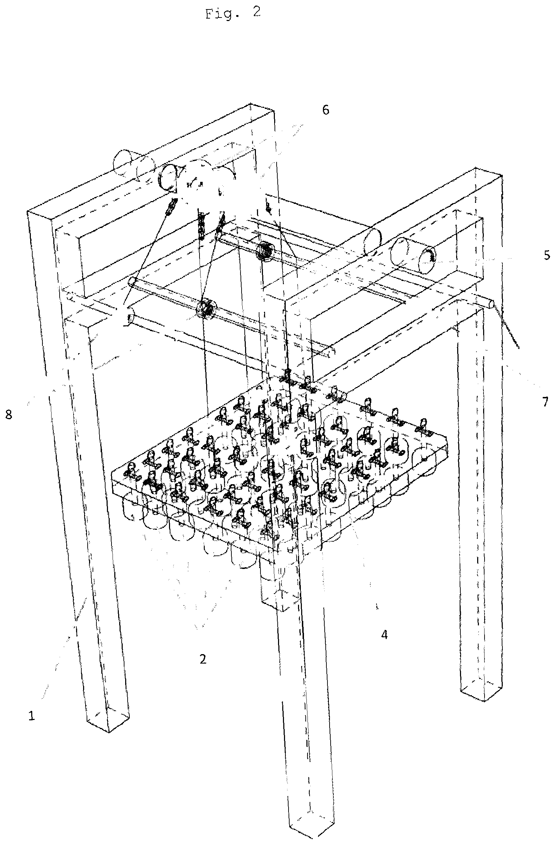

Referring to Figure 2, the floating portion (11) comprises a surface (4) disposed on the entirety of a plurality of buoy units (2).

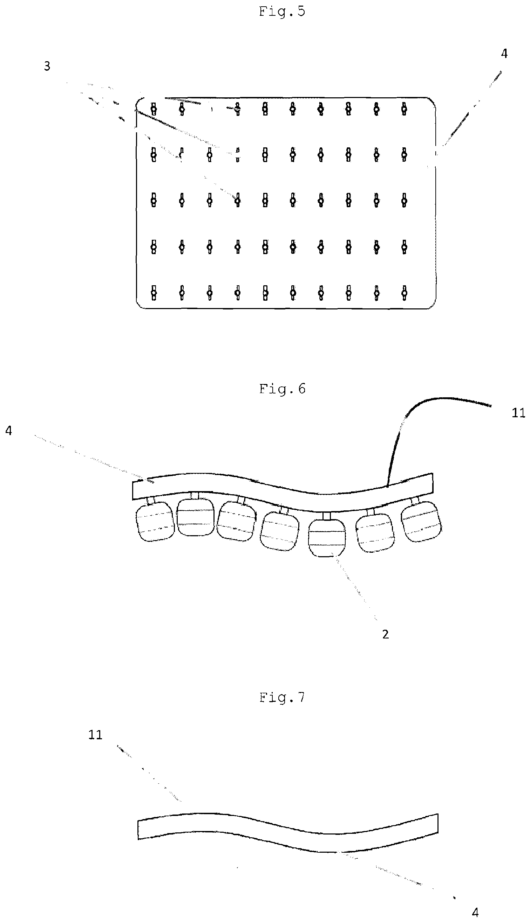

Referring to Figure 7, the floating portion (11) consists of only the surface (4).

According to another embodiment of the invention, the surface (4) is positioned on a part of the mass formed by the plurality of the buoy units (2). In this case, the surface is positioned only on some of the buoy units (2) disposed within the structure and the remaining part may be left uncovered. In this case, the mass formed by the buoy units (2) may be connected together by the use of a connection apparatus or the buoy units (2) may be released with respect to one another.

According to another embodiment of the invention, the surface (4) is made up of more than piece and is positioned on the buoy units (2).

The surface (4) is manufactured from the raw materials that provide flexibility. In this way, the floating portion (11) that floats due to the wave motion may exhibit the oscillation in concordance with the wave motion. By means of the oscillation of the floating portion (11) in concordance with the wave motion, it will be possible to absorb more efficiently the energy that will be released as a result of the wave motion.

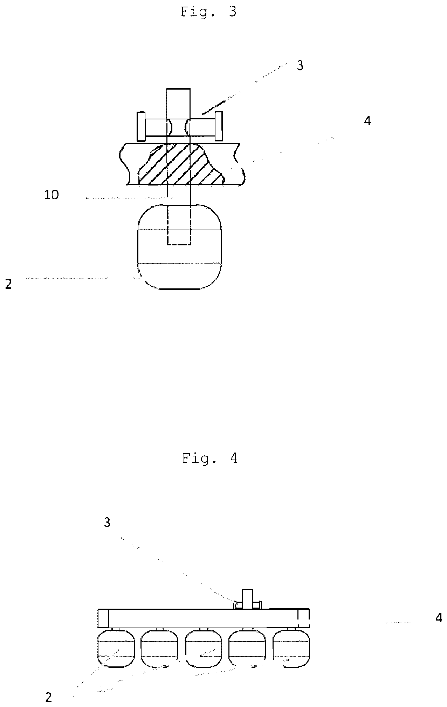

Figure 4 shows the stable state of the floating portion (11) on a still mass of water. In this case, the floating portion (11) is in a still state where it does not exhibit any oscillation.

Figure 6 shows the floating portion (11) in a state floating on the rough mass of water. In this case, the floating portion (11) is in a state of oscillation.

As a result of the force vectors generated by the wave in directions perpendicular and horizontal to the base of the water mass, each buoy unit (2) will try to move in the directions corresponding to the force vectors and these units will collectively perform oscillation in a manner that conforms to the wave motion.

The buoy units (2) are the components that enable the floating portion (11) to stay on the mass of water. For this reason, the buoy units (2) are positioned at the bottom part of the floating portion (11) in contact with the mass of water. The surface (4), on the other hand, both forms a flexible connection enabling the buoy units (2) to move together and generates a weight on the buoy units (2) to enable the floating portion (11) to submerge in the mass of water by the desired extent.

The surface (4) has a structure, which is able to float by the lifting action of the mass of the buoy units (2), but has a specific gravity that is not suitable for enabling the same to float on the water by itself.

The surface and the buoy units (2) are mounted in such a way that a certain distance is present between them. Likewise, the buoy units (2) positioned at the bottom part of the surface (4) are disposed in a way to present some distance between the same.

The oscillating motion generated on the surface (4) by the action of the waves causes the buoy units (2), which are disposed with a certain distance in between, to come near and move away from one another.

Referring to Figure 3, the buoy unit (2) is connected to the surface (4) via the buoy-surface connection (10). According to Figure 3, the buoy unit (2) also comprises a connection member (3).

The connection member (3) enables the connection member (9) to be connected to the buoy unit (2).

The distance between the surface (4) and the buoy units (2) is generated by the buoy-surface connection (10).

According to an embodiment of the invention, the distance between the surface (4) and the buoy units (2) may be arranged by altering the length of the buoy-surface connection (10).

According to an embodiment of the invention, the connection member (9) may be devised in the form of a rope or chain, while the connection member (3) may be devised in the form of a pin.

Referring to Figure 2, the floating portion (11) is connected with the power generating shaft (5) via 3 connection members (9). The system may also be operated by the use of a different number of connection members (9).

Referring to Figure 5, each buoy unit (2) includes a buoy connection member (3). Said buoy connection members (3) may constitute a connection point for the connection members (9). Each buoy connection member (3) may be connected to a connection member (9) or only some of the buoy connection members (3) may be connected to the connection members (9).

Similarly, it may not be necessary for each buoy unit (2) to have a buoy connection member (3) and only some of the buoy units (2) may include the buoy connection members (3) .

The power generating shaft (5) is equipped with a rotary coupling (6) in order to provide the transfer of power from the floating portion (11) to the power generating shaft (5).

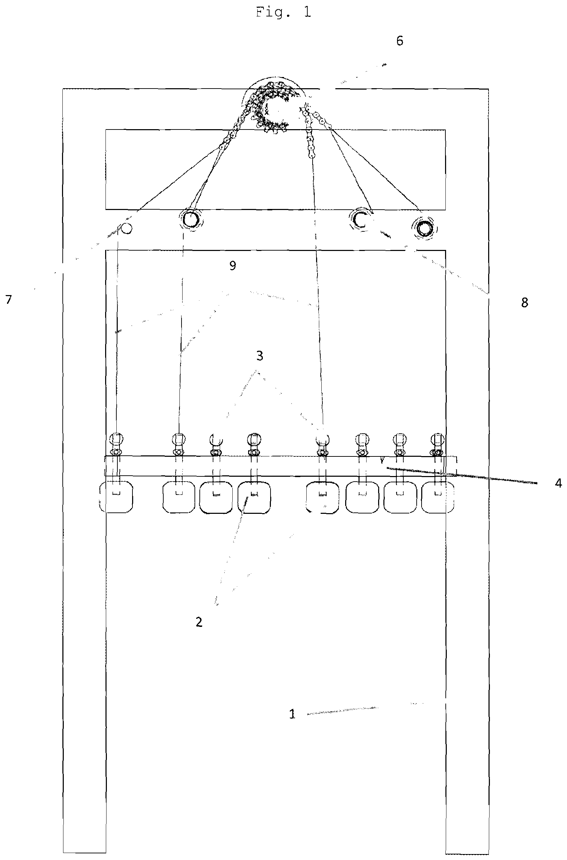

Referring to Figure 1, the rotary coupling (6) is in the form of a gear and the parts of the connection member (9) in contact with the rotary coupling (6) or the entire connection member (9) is/are in the form of a chain in order to ensure the transfer of the motion.

The rotary coupling (6) has a structure capable of rotating the power generating shaft (5) towards the direction where the motion is required and of idling during the motion in the opposite direction. In this way, it will be possible for the power generating shaft (5) to rotate only in the direction where the energy generation is to be provided.

In order to ensure the stable operation of the connection members (9) that transfer motion to the power generating shaft (5) and ensure the tension in the connection members (9), the connection member guide shaft/s (7) is/are positioned on the mounting body (1). The guide shafts (7) are equipped with the tension member (8) in order to provide the tension in the connection members (9).

The guide shafts (7) enable the axial orientation of the connection members (9) towards the power generating shaft (5) .

The tension member (8) winds on itself the slack/excess of the connection member (9), thereby ensuring that the connection member (9) operates continuously with a certain tension.

## Claims

1. Wave-based energy generation mechanism comprising a surface with flexible structure (4), which is positioned on the water for the purpose of gaining mobility under the influence of the wave motions in a water body in harmony with said wave, wherein the motions generated on the flexible structure (4) due to the wave are converted to energy by a power generating shaft (5) connected via connection member/s (9) in a way to allow the transfer of the motion in the flexible structure (4) **characterized in that** it comprises;
• the flexible structure (4) having a structure with a specific gravity not suitable for floating on the water with its own total weight,
• buoy units (2) positioned at the bottom part of the flexible structure (4) which are disposed and mounted in a way such that a certain distance is present between the buoy units (2) and the flexible structure (4).

2. Wave-based energy generation mechanism according to Claim 1 **characterized in that** the connection members (9) connecting the power generating shaft (5) to the flexible structure (4) is/may be directly connected to the flexible structure (4) via multiple connection apparatus (3) in the form of pins in order to enable the flexible structure (4) to be connected to the power generating shaft (5) by as many points as possible so that a great portion of the motions caused by the wave on the flexible structure (4) along the x, y, z axes may be transferred to the power generating shaft (5).

3. Wave-based energy generation mechanism according to Claim 1 **characterized in that** it comprises the flexible structure (4) formed by connecting together more than one sub-members.

4. Wave-based energy generation mechanism according to Claim 1 **characterized in that** it comprises the flexible structure (4) formed that it designates a flexible structure where the specific gravity may be varied, said structure being partially full and partially empty, having various geometric forms and having the capability of floating.

5. Wave-based energy generation mechanism according to Claim 1 **characterized in that** it comprises the flexible structure (4) disposed on all of the buoy units (2).

6. Wave-based energy generation mechanism according to Claim 1 **characterized in that** it comprises the flexible structure (4) disposed on a part of the buoy units (2).

7. Wave-based energy generation mechanism according to Claim 1 **characterized in that** it comprises the buoy units (2), which are in a state connected together by the use of a connection apparatus or in a free state with respect to one another.

8. Wave-based energy generation mechanism according to Claim 7
**characterized in that** it comprises the buoy-structure connection (10), which enables to adjust the distance between the flexible structure (4) and the buoy units (2).

## Patentansprüche

1. Wellenbasierter Energieerzeugungsmechanismus umfassend eine Oberfläche mit flexibler Struktur (4), die auf dem Wasser positioniert ist, um unter dem Einfluss der Wellenbewegungen in einem Wasserkörper im Einklang mit der genannten Welle Mobilität zu erlangen, wobei die auf der flexiblen Struktur (4) aufgrund der Welle erzeugten Bewegungen durch einen Stromerzeugungsschaft (5) in Energie umgewandelt werden, die über Verbindungselement/e (9) in einer Weise verbunden ist, die die Übertragung der Bewegung in der flexiblen Struktur (4) ermöglicht, **dadurch gekennzeichnet, dass** er umfasst;
• die flexible Struktur (4), die eine Struktur mit einem spezifischen Gewicht aufweist, das nicht geeignet ist, mit ihrem eigenen Gesamtgewicht auf dem Wasser zu schwimmen,
• Bojeneinheiten (2), die am unteren Teil der flexiblen Struktur (4) positioniert sind, die in einer Weise angeordnet und montiert sind, dass ein bestimmter Abstand zwischen den Bojeneinheiten (2) und der flexiblen Struktur (4) vorhanden ist.

2. Wellenbasierter Energieerzeugungsmechanismus nach Anspruch 1, **dadurch gekennzeichnet, dass** die Verbindungselemente (9), die den Stromerzeugungsschaft (5) mit der flexiblen Struktur (4) verbinden, über mehrere Verbindungsvorrichtungen (3) in Form von Stiften direkt mit der flexiblen Struktur (4) verbunden sind/werden können, um zu ermöglichen, dass die flexible Struktur (4) über so viele Punkte wie möglich mit dem Stromerzeugungsschaft (5) verbunden wird, so dass ein großer Teil der durch die Welle auf der flexiblen Struktur (4) entlang der x-, y-, z-Achsen verursachten Bewegungen auf den Stromerzeugungsschaft (5) übertragen werden kann.

3. Weilenbasierter Energieerzeugungsmechanismus nach Anspruch 1, **dadurch gekennzeichnet, dass** er die flexible Struktur (4) umfasst, die durch Verbinden von mehr als einem Unterelement ausgebildet ist.

4. Wellenbasierter Energieerzeugungsmechanismus nach Anspruch 1, **dadurch gekennzeichnet, dass** er die flexible Struktur (4) umfasst, die so ausgebildet ist, dass sie eine flexible Struktur bezeichnet, bei der das spezifische Gewicht variiert werden kann, die genannte Struktur teilweise voll und teilweise leer ist, verschiedene geometrische Formen aufweist und die Fähigkeit hat, zu schwimmen.

5. Wellenbasierter Energieerzeugungsmechanismus nach Anspruch 1, **dadurch gekennzeichnet, dass** er die flexible Struktur (4) umfasst, die auf allen Bojeneinheiten (2) angeordnet ist.

6. Wellenbasierter Energieerzeugungsmechanismus nach Anspruch 1, **dadurch gekennzeichnet, dass** er die flexible Struktur (4) umfasst, die an einem Teil der Bojeneinheiten (2) angeordnet ist.

7. Wellenbasierter Energieerzeugungsmechanismus nach Anspruch 1, **dadurch gekennzeichnet, dass** er die Bojeneinheiten (2) umfasst, die sich in einem durch die Verwendung einer Verbindungsvorrichtung miteinander verbundenen Zustand oder in einem freien Zustand in Bezug aufeinander befinden.

8. Weilenbasierter Energieerzeugungsmechanismus nach Anspruch 7, **dadurch gekennzeichnet, dass** er die Bojen-Struktur-Verbindung (10) umfasst, die es ermöglicht, den Abstand zwischen der flexiblen Struktur (4) und den Bojeneinheiten (2) einzustellen.

## Revendications

1. Mécanisme de génération d'énergie à base d'ondes comprenant une surface avec une structure flexible (4), qui est positionnée sur l'eau dans le but de gagner en mobilité sous l'influence des mouvements des ondes dans un corps d'eau en harmonie avec ladite onde, dans lequel les mouvements générés sur la structure flexible (4) en raison de l'onde sont convertis en énergie par un arbre de génération d'énergie (5) connecté via un/des élément(s) de connexion (9) de manière à permettre le transfert du mouvement dans la structure flexible (4), **caractérisé en ce qu'**il comprend ;
• la structure flexible (4) ayant une structure avec une gravité spécifique non adaptée pour flotter sur l'eau avec son propre poids total,
• des unités de bouée (2) positionnées à la partie inférieure de la structure flexible (4) qui sont disposées et montées de manière à ce qu'une certaine distance soit présente entre les unités de bouée (2) et la structure flexible (4).

2. Mécanisme de génération d'énergie à base d'ondes selon la revendication 1, **caractérisé en ce que** les éléments de connexion (9) connectant l'arbre de génération d'énergie (5) à la structure flexible (4) sont/peuvent être directement connectés à la structure flexible (4) par l'intermédiaire d'appareils de connexion multiples (3) sous la forme de broches afin de permettre à la structure flexible (4) d'être connectée à l'arbre de génération d'énergie (5) par autant de points que possible de sorte qu'une grande partie des mouvements provoqués par l'onde sur la structure flexible (4) le long des axes x, y, z peut être transférée à l'arbre de génération d'énergie (5) .

3. Mécanisme de génération d'énergie à base d'ondes selon la revendication 1 **caractérisé en ce qu'**il comprend la structure flexible (4) formée en connectant ensemble plus d'un sous-élément.

4. Mécanisme de génération d'énergie à base d'ondes selon la revendication 1 **caractérisé en ce qu'**il comprend la structure flexible (4) formée **en ce qu'**elle désigne une structure flexible où la gravité spécifique peut varier, ladite structure étant partiellement pleine et partiellement vide, ayant diverses formes géométriques et ayant la capacité de flotter.

5. Mécanisme de production d'énergie à base d'ondes selon la revendication 1 **caractérisé en ce qu'**il comprend la structure flexible (4) disposée sur l'ensemble des unités de bouée (2).

6. Mécanisme de génération d'énergie à base d'ondes selon la revendication 1 **caractérisé en ce qu'**il comprend la structure flexible (4) disposée sur une partie des unités de bouée (2).

7. Mécanisme de génération d'énergie à base d'ondes selon la revendication 1, **caractérisé en ce qu'**il comprend les unités de bouée (2), qui sont dans un état connecté ensemble par l'utilisation d'un appareil de connexion ou dans un état libre les unes par rapport aux autres.

8. Mécanisme de génération d'énergie à base d'ondes selon la revendication 7 **caractérisé en ce qu'**il comprend la connexion bouée-structure (10), qui permet d'ajuster la distance entre la structure flexible (4) et les unités de bouée (2).
